# EUROPÄISCHE PATENTSCHRIFT

(11) **EP 4 445 983 B1**
(45) Veröffentlichungstag und Bekanntmachung des Hinweises auf die Patenterteilung: **22.07.2026**
(21) Anmeldenummer: 24163156.3
(22) Anmeldetag: 13.03.2024
(51) Int. Cl.: B01D 35/143, A47L 15/00, A47L 15/42, B01D 37/04, B01D 46/42, D06F 33/47, D06F 39/08

(54) **COMPUTERIMPLEMENTIERTES VERFAHREN ZUR BESTIMMUNG EINES ZU-STAND EINES FILTERS IN EINEM WASSERFÜHRENDEN HAUSHALTSGERÄT, COMPUTERPROGRAMM UND WASSERFÜHRENDES HAUSHALTSGERÄT**
COMPUTER-IMPLEMENTED METHOD FOR DETERMINING A FILL LEVEL OF A FILTER IN A WATER-CONDUCTING DOMESTIC APPLIANCE, COMPUTER PROGRAM AND WATER-CONDUCTING DOMESTIC APPLIANCE
PROCÉDÉ MIS EN OEUVRE PAR ORDINATEUR POUR DÉTERMINER UN ÉTAT SUPPLÉMENTAIRE D'UN FILTRE DANS UN APPAREIL MÉNAGER À CIRCULATION D'EAU, PROGRAMME INFORMATIQUE ET APPAREIL MÉNAGER À CIRCULATION D'EAU

(30) Priorität: 14.04.2023 DE 102023203397
(43) Veröffentlichungstag der Anmeldung: 16.10.2024
(73) Patentinhaber: BSH Hausgeräte GmbH, 81739 München (DE)
(72) Erfinder: Kerner, Simon, 13409 Berlin (DE); Beckmann, Tyl, 10777 Berlin (DE)

(56) Entgegenhaltungen:
- EP-A1- 0 247 995
- EP-A1- 2 916 708
- EP-A2- 1 096 052
- CN-A- 112 411 125
- JP-A- H0 788 072

## Beschreibung

Die vorliegende Erfindung betrifft ein computerimplementiertes Verfahren zur Bestimmung eines Zustands eines Filters in einem wasserführenden Haushaltsgerät. Die vorliegende Erfindung betrifft ferner ein Computerprogramm sowie ein wasserführendes Haushaltsgerät.

Aus dem Stand der Technik ist es bereits bekannt, wasserführende Haushaltssysteme mit Filtersystemen zur Filtration von diversen Partikeln auszustatten. Beispielsweise ist es bei als Wäschepflegeräten ausgestalteten wasserführenden Haushaltsgeräten erforderlich, Flusen und anderweitige Partikel, beispielsweise Mikroplastik, abzufiltrieren, um so Beschädigungen am wasserführenden Haushaltsgerät und/oder der Umwelt zu vermeiden. Diese Filtersysteme haben sich dahingehend bewährt, Verunreinigungen in wasserführenden Haushaltsgeräten zu verhindern oder zumindest zu reduzieren und insofern eine zuverlässige Verwendung der wasserführenden Haushaltsgeräte zu ermöglichen. Üblicherweise werden die Filtersysteme manuell durch einen Benutzer gesäubert. Wesentlich ist dabei auch, die Säuberung des Filtersystems mehr oder weniger regelmäßig durchzuführen, um ein Zusetzen des Filtersystems zu unterbinden und so Beschädigungen des wasserführenden Haushaltsgeräts zu vermeiden oder zumindest einen ordnungsgemäßen Betrieb des wasserführenden Haushaltsgeräts zu gewährleisten. Ein ordnungsgemäßer Betrieb des wasserführenden Haushaltsgeräts sieht das Vorhandensein eines Filtersystems vor.

Aus EP 1 096 052 A2 ist beispielsweise eine Waschmaschine bekannt, bei der der Zustand des Filters erkannt werden kann. JP H07 88072 A offenbart ein Geschirrspülgerät, bei dem der Zustand des Filters ermittelt werden kann.

Eine Aufgabe der vorliegenden Erfindung ist es ein Verfahren bereitzustellen, das Beschädigungen eines zu betreibenden wasserführenden Haushaltsgeräts entgegenwirken kann und Betriebsstörungen zu vermeiden. Die vorliegende Erfindung löst dieses Problem mit einem Verfahren zur Bestimmung eines Zustands eines Filtersystems in einem wasserführenden Haushaltsgerät mit den Merkmalen des Anspruchs 1, mit einem Computer-programmprodukt mit den Merkmalen des Anspruchs 9 und mit einem wasserführenden Haushaltsgerät mit den Merkmalen des Anspruchs 10.

Gemäß einem Aspekt der vorliegenden Erfindung wird ein computerimplementiertes Verfahren zur Bestimmung eines Zustands eines Filtersystems in einem wasserführenden Haushaltsgerät bereitgestellt, umfassend: Initiieren eines Fluidstroms zu dem Filtersystem zu einer Startzeit, um ein Filtrat zu erlangen, Erfassen des Filtrats stromabwärts des Filtersystems, um eine Ankunftszeit des Filtrats zu bestimmen, Bestimmen einer Filterzeit basierend auf der Startzeit und der Ankunftszeit, und Bestimmen eines Zustands des Filtersystems basierend auf der Filterzeit.

Gegenüber dem bekannten Stand der Technik liefert die vorliegende Erfindung den Vorteil, dass der Zustand des Filtersystems auf einfache Art und Weise basierend auf der Filterzeit bestimmt werden kann. Zur Bestimmung der Filterzeit können bereits in einem Haushaltsgerät vorhandene Sensoren verwendet werden. Damit ist keine Neuausstattung des Haushaltsgeräts mit zusätzlichen Sensoren notwendig.

Das Filtersystem, das auch als Filtereinheit bezeichnet werden kann, kann für Fluid, welches das Filtersystem durchströmt, um gefiltert zu werden, einen Strömungswiderstand darstellen. Die Erfindung basiert auf der Idee, durch Ermittlung einer Filterzeit beginnend mit einem Start einer Filtration und endend mit einem Erreichen des Filtrats an einer Einheit zur Erfassung des Filtrats Rückschlüsse auf einen Zustand des Filtersystems führen zu können. Der Zustand des Filtersystems kann ein Vorhandensein eines Filtersystems und/oder eine Belegung des Filtersystems umfassen. Somit kann eine Laufzeit von Fluid durch das Filtersystem bestimmt werden. Ist beispielsweise kein Filterelement in dem Filtersystem eingesetzt, kann das Fluid relativ ungehindert durch das Filtersystem hindurchströmen. Ist dagegen ein Filterelement in dem Filtersystem eingesetzt verzögert sich die Durchströmung des Filtersystems. Die Filterzeit kann sich weiter verlängern, wenn das Filterelement mit Partikeln zugesetzt ist.

Demnach kann in einem ersten Schritt des Verfahrens das Initiieren eines Fluidstroms zu dem Filtersystem erfolgen, bei dem zu einer Startzeit ts das Filtersystem mit einem Fluid beaufschlagt wird. Der Fluidstrom kann in einer Ausgestaltung der Erfindung in einer Durchströmungsrichtung (d.h. von einer stomaufwärtigen Seite des Filtersystems zu einer stromabwärtigen Seite des Filtersystems) durch das Filtersystem strömen, wobei das Filtersystem derart ausgelegt ist, den Fluidstrom zu filtrieren, um ein Partikel aus dem Fluid auszufiltern und Filtrat zu erhalten. Die Startzeit ts kann dabei als ein Zeitpunkt definiert werden, an dem der Fluidstrom das Filtersystem erstmalig kontaktiert (an der stromaufwärtigen Seite des Filtersystems), um gefiltert zu werden. Die Startzeit ts kann auch als Zeitpunkt definiert werden, an dem ein erstmaliger Durchfluss des Fluidstroms durch das Filtersystem beginnt. Ferner kann die Startzeit bestimmt werden, wenn ein Zufluss von Fluid zu dem Filtersystem ermöglicht wird. So kann ein Absperrvorrichtung stromaufwärts des Filtersystems vorgesehen sein. Wird diese Absperrvorrichtung geöffnet, kann zu diesem Zeitpunkt die Startzeit definiert werden. Ferner kann die Startzeit ts auch bei einem Starten der Pumpe (welche beispielsweise Fluid dem Filter zuführt) definiert werden oder bei Überschreiten eines Volumenstromgrenzwertes an der Pumpe.

Der Zeitpunkt ts wird vorzugsweise durch eine Erfassungseinheit in dem Filtersystem und/oder in Durchflussrichtung vor dem Filtersystem erfasst. Insbesondere kann das Verfahren vorsehen, dass zu der Startzeit ts ein Timer gestartet wird. Das Verfahren sieht demnach vorzugsweise vor, dass mit der Startzeit ts der Beginn einer Zeiterfassung erfolgt.

Ferner kann eine Erfassung des Filtrats stromabwärts des Filtersystems erfolgen. Das Erfassen des Filtrats erfolgt, um eine Ankunftszeit ta des Filtrats zu bestimmen. Insbesondere erfolgt das Erfassen des Filtrats an einer dafür geeigneten Erfassungseinheit. Die Erfassungseinheit ist in einer Durchflussrichtung nach dem Filtersystem angeordnet (d.h. an einer stromabwärtigen Seite des Filtersystems). Die Erfassungseinheit ist in einer Durchflussrichtung stromabwärts zu dem Filtersystem angeordnet.

Das Erfassen des Filtrats erfolgt zumindest erstmalig, nachdem der Fluidstrom das Filtersystem passiert und eine Erfassungseinheit, die in einer Durchflussrichtung nach dem Filtersystem angeordnet ist, erreicht hat. Bevorzugt kann vorgesehen sein, dass die Ankunftszeit ta als eine Zeit definiert wird, bei der der Fluidstrom erstmalig an der Erfassungseinheit erfasst wird. Die Erfassung des Filtrats stromabwärts des Filtersystems kann als zweiter Schritt des erfindungsgemäßen Verfahrens beschrieben werden.

Ferner kann das Bestimmen einer Filterzeit tf basierend auf der Startzeit ts und der Ankunftszeit ta erfolgen. Somit kann vorgesehen sein, dass eine Zeitspanne ermittelt wird, die mit der Startzeit ts beginnt und mit der Ankunftszeit ta endet. Diese Zeitspanne kann durch eine Differenz von Ankunftszeit ta und Startzeit ts (ta - ts) gebildet sein und kann als Filterzeit tf definiert sein. In anderen Worten kann zu der Startzeit ts ein Timer gestartet werden. Dieser Timer kann zu der Ankunftszeit ta angehalten werden. Basierend auf der Filterzeit tf kann ein Zustand des Filtersystems bestimmt werden.

Somit können Rückschlüsse auf den Zustand des Filtersystems durch Bestimmung der Filterzeit tf realisiert sein. Dabei kann davon ausgegangen werden, dass die Filterzeit tf umso größer ist, je länger das Filtrieren dauert. Demnach ist bei höheren Filterzeiten tf von einer höheren Filterbelegung auszugehen, bei geringeren Filterzeiten tf von entsprechend niedrigerer Filterbelegung oder von keinem vorhandenen Filterelement. Als Referenz kann dabei von einem ungenutzten Filtersystem ausgegangen werden, das wie eingangs dargelegt, bereits einen Strömungswiderstand auch bei sehr geringer Belegung darstellt. Ferner kann als Referenz auch eine Durchströmzeit des Filtersystems ohne Filterelement herangezogen werden. Der Strömungswiderstand des Filtersystems ist dabei umso größer, je höher das Filtersystem belegt ist. Dementsprechend länger ist dann auch die Filterzeit tf. Die Bestimmung der Filterzeit tf kann als dritter Schritt des erfindungsgemäßen Verfahrens beschrieben werden.

Durch die Bestimmung der Filterzeit tf kann somit ermittelt werden, ob ein Filtersystem vorhanden ist. Weiterhin kann ermittelt werden, falls ein Filtersystem vorhanden ist, zu welchem Grad es bereits belegt ist. Hierdurch kann ermittelt werden, ob das wasserführende Haushaltsgerät ordnungsgemäß betrieben wird, wodurch mögliche Beschädigungen des wasserführenden Haushaltsgeräts, die zumindest mit dem Filtersystem zusammenhängen können, reduzierbar sein können.

Vorzugsweise umfasst der Zustand des Filtersystems ein Vorhandensein eines Filterelements in dem Filtersystem und/oder eine Belegung eines Filterelements in dem Filtersystems. Mit anderen Worten kann eine Änderung eines Strömungswiderstands in einer Durchflussrichtung vor dem Filtersystem, stromaufwärts, und nach dem Filtersystem, stromabwärts, erfasst werden. Hieraus können Rückschlüsse auf das Vorhandensein eines Filterelements gezogen werden. Sofern ein Filterelement vorhanden ist, kann eine Aussage zu einem Belegungsgrad des Filterelements erfolgen. Vorteilhaft kann auch eine verbleibende Nutzungsdauer des Filterelements abhängig von dem Belegungsgrad ermittelt und insbesondere ausgegeben werden. Der Belegungsgrad des Filterelements kann im Wesentlichen proportional zu der Filterzeit tf sein. Je länger die Filterzeit tf ist, desto höher kann der Belegungsgrad des Filtersystems sein.

Zudem kann ein Strömungswiderstand eines ungenutzten Filtersystems ermittelt werden oder bereits bekannt sein und dieser Strömungswiderstand kann bekannter Referenzwert vergleichsweise herangezogen werden, um zu ermitteln, ob ein Filterelement vorhanden ist. In einem Fall, bei dem der erfasste Strömungswiderstand geringer ist als der des bekannten und/oder ermittelten Referenzwertes, ist davon auszugehen, dass kein Filterelement vorhanden ist. Durch einen Vergleich des tatsächlichen Strömungswiderstands mit einem Referenzwert und der Ableitung auf das Vorhandensein eines Filterelement kann ein ordnungsgemäßer Betrieb eines wasserführenden Haushaltsgeräts zuverlässig ermöglicht werden.

In einer Weiterbildung der Erfindung kann vorgesehen sein, dass ein Gradient der Filterzeit tf ermittelt wird. Vorteilhaft kann aus der Ermittlung des Gradienten ein Rückschluss auf die Filterbelegung erfolgen. Insbesondere kann davon ausgegangen werden, dass die Erfassung des Filtrats mit zunehmender Zeit abnimmt. Eine Filterzeit tf kann auch als Filtrierzeit beschrieben werden.

In einer Weiterbildung der Erfindung kann vorgesehen sein, dass das Erfassen des Filtrats mittels Durchflussmessung erfolgt. Vorzugsweise ist zumindest eine Einheit zur Durchführung einer Durchflussmessung vorgesehen. Eine Einheit zur Durchführung einer Durchflussmessung ist vorteilhaft als Durchflusssensor ausgestaltet. Die Erfassung des Filtrats mittels Durchflussmessung ist eine zuverlässige Methode, die zudem mit hoher Genauigkeit an beliebigen Positionen durchgeführt werden kann.

Eine Durchflussmessung kann über einen Differenzdruck erfolgen. Alternativ oder ergänzend kann eine Durchflussmessung als Flow-Messung nach dem thermischen Prinzip erfolgen. Diese Messungen sind zuverlässig und präzise durchführbar und können damit wesentlich zu einem ordnungsgemäßen Betrieb des wasserführenden Haushaltsgeräts beitragen.

In einer weiteren Weiterbildung der Erfindung kann vorgesehen sein, dass das Erfassen des Filtrats mittels Volumenmessung erfolgt. Vorzugsweise ist zumindest eine Einheit zur Durchführung einer Volumenmessung vorgesehen. Eine Einheit zur Durchführung einer Volumenmessung ist vorteilhaft als Füllstandsensor ausgestaltet. Die Erfassung des Filtrats mittels Volumenmessung kann vorteilhaft in einem bereits vorhandenem Fluidtank oder dergleichen Behälter des wasserführenden Haushaltsgeräts mittels zumindest eines Füllstandsensors erfolgen. Vorteilhaft kann für diesen Zweck ein bereits vorhandener Füllstandsensor herangezogen werden. Hierdurch können Komponenten eingespart werden.

Insbesondere kann vorgesehen sein, dass das wasserführende Haushaltsgerät als Wäschepflegegerät ausgestaltet ist und zumindest einen Laugenbehälter umfasst, in dem zumindest ein Füllstandsensor angeordnet ist. Es kann vorgesehen sein, dass die Erfassung des Filtrats in dem Laugenbehälter erfolgt. Der Laugenbehälter kann als Fluidtank oder dergleichen Behälter vorgesehen sein.

Weiterhin kann vorgesehen sein, dass das Erfassen des Filtrats mittels Durchflussmessung und mittels Volumenmessung erfolgt. Vorzugsweise ist hierzu zumindest eine Einheit zur Durchführung einer Durchflussmessung vorgesehen. Eine Einheit zur Durchführung einer Durchflussmessung ist vorteilhaft als Durchflusssensor ausgestaltet. Zusätzlich ist zumindest eine Einheit zur Durchführung einer Volumenmessung vorgesehen. Eine Einheit zur Durchführung einer Volumenmessung ist vorteilhaft als Füllstandsensor ausgestaltet. Derart kombinierte Messungen können eine verbesserte Genauigkeit der Erfassung eines Filtrats ermöglichen. Zudem kann eine weitere Erfassung von Filtrat selbst bei Ausfall eines Sensors, d.h. Durchflusssensor oder Füllstandsensor, sichergestellt werden.

Ferner kann vorgesehen sein, dass die Erfassung des Filtrats mittels kapazitiver Füllstandsmessung erfolgt. Insbesondere kann vorgesehen sein, dass ein kapazitiver Sensor und ein Fluidtank oder dergleichen Behälter des wasserführenden Haushaltsgeräts einen Kondensator bilden, dessen Kapazität abhängig ist von der Füllmenge im Fluidtank. Dabei weist ein leerer Fluidtank hat eine niedrigere, ein gefüllter Fluidtank eine höhere Kapazität auf. Besonders bevorzugt kann vorgesehen sein, dass der Fluidtank als Laugenbehälter eines als Wäschepflegegeräts ausgestaltetes wasserführendes Haushaltsgerät ausgestaltet ist. Eine kapazitive Füllstandsmessung kann vorteilhaft sehr genaue Messergebnisse liefern.

Ferner kann vorgesehen sein, dass die Erfassung des Filtrats mittels hydrostatischer Füllstandsmessung erfolgt. Insbesondere kann vorgesehen sein, dass zumindest ein Drucksensor umfasst ist, der einen Füllstand in einem Fluidtank oder dergleichen Behälter des wasserführenden Haushaltsgeräts erfasst und einen hydrostatischen Druck erfasst, der von der Masse des Fluids in dem Fluidtank abhängt und proportional zum Füllstand steigt. Eine hydrostatische Füllstandsmessung kann vorteilhaft sehr präzise ausgeführt werden.

Vorzugsweise kann die Erfassung des Filtrats mittels hydrostatischer Füllstandsmessung und mittels kapazitiver Füllstandsmessung erfolgen. Neben einer hochpräzisen Erfassung des Filtrats kann die Kombination von zumindest zwei Messmethoden eine erhöhte Zuverlässigkeit ermöglichen.

Vorzugsweise kann die Erfassung des Filtrats in einem Fluidtank oder dergleichen Behälter, vorzugsweise in einem Laugenbehälter eines als Wäschepflegegerät ausgestalteten wasserführenden Haushaltsgeräts erfolgen, wobei zusätzlich oder alternativ erfasst wird, ob ein vorgegebener Füllstand in dem Laugenbehälter einen vorgegebenen Füllstandwert überschreitet.

Vorzugsweise kann die Erfassung des Filtrats mittels zumindest eines optischen Sensors erfolgen. Eine derartige Erfassung kann mit technische verringertem Aufwand bei einer hohen Messgenauigkeit erfolgen. Besonders bevorzugt kann weiterhin vorgesehen sein, dass die Erfassung des Filtrats mittels zumindest eines optischen Sensors in einem Fluidtank oder dergleichen Behälter, vorzugsweise in einem Laugenbehälter eines als Wäschepflegegerät ausgestalteten wasserführenden Haushaltsgeräts, erfolgt. Vorteilhaft kann ein ordnungsgemäßer Betrieb des wasserführenden Haushaltsgeräts, insbesondere Wäschepflegegeräts ermöglicht werden.

Vorzugsweise kann die Erfassung des Fluidstroms bis zu einem Zeitpunkt erfolgen, an dem Füllstand in dem Fluidtank, insbesondere dem Laugenbehälter, konstant bleibt. Auf diese Weise kann auch die Filterzeit ermittelt werden.

Die Erfassung des Filtrats kann in einer Durchflussrichtung stromabwärts des Filtersystems erfolgen. Die Erfassung des Filtrats erfolgt insbesondere in einer Durchflussrichtung stromabwärts des Filtersystems nach dem Filtersystem. Die Erfassung des Filtrats kann mittels Volumenstrommessung und/oder mittels Durchflussmessung stromabwärts erfolgen. Die Erfassung des Filtrats kann mittels Volumenstrommessung und/oder Durchflussmessung in einer Durchflussrichtung nach dem Filtersystem erfolgen. Die Erfassung des Filtrats erfolgt, um eine Ankunftszeit ta des Filtrats zu bestimmen. Die Ankunftszeit ta bezieht sich auf einen Zeitpunkt, an dem das Filtrat durch Durchflussmessung und/oder Volumenstrommessung an einer hierfür geeigneten Einheit zur Durchflussmessung und/oder Volumenstrommessung erfasst bzw. detektiert wird.

Vorzugsweise erfolgt das Erfassen des Filtrats kontinuierlich oder in Intervallen. Vorteilhaft können durch kontinuierliche Messungen deutlich höher Messgenauigkeiten erreichbar sein. Messungen bzw. Erfassungen des Filtrats, insbesondere eines Fluidstroms des Filtrats, sind kontinuierlich, wenn erfasste bzw. zu erfassende Messgrößen zeitlich ununterbrochen erfasst und vorzugsweise weitergeleitet werden.

Alternativ kann vorgesehen sein, dass das Erfassen des Filtrats in Intervallen erfolgt. In Intervallen erfolgte Messungen bzw. Erfassungen des Filtrats, insbesondere eines Fluidstroms des Filtrats, erfolgen mit zeitlich definierten Unterbrechungen, sind also diskontinuierlich.

Vorzugsweise wird die Ankunftszeit ta basierend auf einer Messung eines Füllstandsensors in einem stromabwärts des Filtersystems angeordneten Behälter bestimmt wird. Damit kann ein bereits verbauter Sensor (d.h. der Füllstandsensors) genutzt werden, um den Zustand des Filtersystems zu bestimmen. Damit sind keine strukturellen Änderungen an dem Haushaltsgerät notwendig, um die den Zustand des Filtersystems bestimmen zu können.

In einer Ausführungsform der Erfindung kann vorgesehen sein, dass das Filtrat in einem einstufigen Filtersystem erzeugt wird. Ein einstufiges Filtersystem kann lediglich eine Filtereinheit aufweisen und daher besonders einfach und kostengünstig herstellbar sein. Vorteilhaft kann bei der Verwendung eines einstufigen Filtersystems zudem ein vereinfachter Betrieb des wasserführenden Haushaltsgeräts ermöglicht werden.

In einer alternativen Ausführungsform kann die Erfindung vorsehen, dass das Filtrat in einem mehrstufigen, vorzugsweise in einem zweistufigen Filtersystem erzeugt wird. Vorteilhaft kann eine zuverlässigere Erzeugung eines Filtrats ermöglicht werden. Vorzugsweise kann das Filtersystems ein zweistufiges Filtersystem sein, und wobei das Filtrat in einer zweiten Filterstufe des zweistufigen Filtersystems erzeugt wird.

Das Filtrat wird in einer zweiten Filterstufe eines zweistufigen Filtersystems erzeugt. Das Filtersystem als zweistufiges Filtersystem ausgestaltet und umfasst eine erste Filterstufe und eine zweite Filterstufe. Zu einer zuverlässigen Erzeugung eines Filtrats ist die erste Filterstufe als Primärfilterstufe und die zweite Filterstufe als Sekundärfilterstufe ausgestaltet, wobei Partikel in der ersten Filterstufe aufkonzentriert und zu einer Reinigung zu der zweiten Filterstufe transportiert werden. Das Transportieren kann mittels Abpumpen erfolgen.

Das Filtersystem kann auch als Filtervorrichtung bezeichnet werden und umgekehrt. Die Filtervorrichtung kann in einer bevorzugten Ausgestaltung der Erfindung zumindest eine Filtereinheit oder zumindest ein Filterelement umfassen.

In einer Ausführungsform kann vorgesehen sein, dass die Filtervorrichtung zumindest ein Filterelement zur Filtrierung von Fluid umfasst. Die Filtervorrichtung kann zumindest eine, vorzugsweise mehrere Filterstufen aufweisen. Eine Filterstufe kann auch als Filterelement bezeichnet werden und umgekehrt. Die Filtervorrichtung kann zur Erzeugung eines Filtrats vorgesehen sein.

Vorzugsweise umfasst das Verfahren ferner ein Ausgeben einer Statusmeldung an einen Nutzer basierend auf dem Zustand des Filtersystems. Somit kann der Zustand des Filtersystems als Information an einen Nutzer ausgegeben werden. Die an den Nutzer ausgegeben Informationen können eine Angabe umfassen, wann die Filtervorrichtung geleert (d.h. von Partikeln befreit) werden muss. Somit kann der Nutzer den Betrieb des Haushaltsgeräts besser planen. Beispielsweise kann dem Nutzer genaue Kenntnis darüber vermittelt werden, wann der Nutzer ein neues Filterelement kaufen muss.

In einer Ausgestaltung kann vorgesehen sein, dass das Filtrat durch Verdrängung von in dem Filtersystem vorhandenem Fluid erfolgt oder zumindest initiiert wird. Die Verdrängung kann mit geringem konstruktiven Aufwand und insbesondere mit geringer Fehleranfälligkeit vorzugsweise durch zumindest ein Verdrängungsmittel erfolgen. Das zumindest eine Verdrängungsmittel ist vorzugsweise als volumenveränderliches Verdrängungsmittel ausgestaltet.

In einer Ausgestaltung kann das volumenveränderliche Verdrängungsmittel aus einem elastischen Material gefertigt sein oder zumindest ein elastisches Material umfassen. Besonders bevorzugt kann vorgesehen sein, dass das volumenveränderliche Verdrängungsmittel aus einem gummielastischen Material gefertigt ist oder zumindest ein gummielastisches Material umfasst. Ein derartiges Verdrängungsmittel aus einem gummielastischem Material ist insbesondere als Ballon ausgestaltet. Vorteilhaft kann ein derartiges volumenveränderliches Verdrängungsmittel einfach getauscht werden, beispielsweise bei Wartungsarbeiten und/oder zu Reparaturzwecken.

In einer Weiterbildung der Erfindung kann vorgesehen sein, dass das volumenveränderliche Verdrängungsmittel mit einem Fluid befüllbar und/oder befüllt ist. Als Fluide sind insbesondere ein Gas oder ein Gasgemisch vorgesehen. Als Gase sind insbesondere inerte Gase wie Stickstoff oder Edelgase vorteilhaft aufgrund sehr geringer Reaktivität. Stickstoff ist zudem kostengünstig bereitstellbar. Als Gasgemisch ist insbesondere Luft oder ein Gemisch, das Luft umfasst, vorgesehen. Vorgesehen kann auch ein Kompressor oder dergleichen Zuführmittel von Fluid, insbesondere Gas oder Gasgemisch, sein.

Alternativ oder ergänzend kann auch vorgesehen sein, dass das Fluid eine Flüssigkeit umfasst. Besonders vorteilhaft kann dabei vorgesehen sein, dass als Flüssigkeit Wasser oder ein Gemisch, das zumindest spurenweise Wasser umfasst, verwendet wird. Derartige Flüssigkeiten sind mit wasserführenden Haushaltsgeräten besonders kompatibel und können daher die Fehleranfälligkeit des wasserführenden Haushaltsgeräts bei einem etwaigen Defekt des volumenveränderlichen Verdrängungsmittels zumindest nicht weiter erhöhen.

Das volumenveränderliche Verdrängungsmittel kann Fluid in dem Filtersystem, insbesondere in einer Primärfilterstufe und/oder in einer Sekundärfilterstufe eines zweistufigen Filtersystems durch Volumenvergrößerung verdrängen. Eine Volumenvergrößerung kann durch zumindest teilweise Befüllung des volumenveränderlichen Verdrängungsmittels erfolgen. Das volumenveränderliche Verdrängungsmittel kann Fluid in dem Filtersystem, insbesondere in einer Primärfilterstufe und/oder in einer Sekundärfilterstufe eines zweistufigen Filtersystems durch Volumenverkleinerung verdrängen. Eine Volumenverkleinerung kann durch zumindest teilweise Entleerung des volumenveränderlichen Verdrängungsmittels erfolgen.

Das volumenveränderliche Verdrängungsmittel kann als Entwässerungseinheit des wasserführenden Haushaltsgeräts, insbesondere als Entwässerungseinheit zur zumindest teilweisen, vorzugsweise vollständigen oder zumindest nahezu vollständigen Entwässerung des Filtersystems, besonders bevorzugt einer Primärfilterstufe und/oder einer Sekundärfilterstufe eines zweistufigen Filtersystems, vorgesehen sein.

In einer weiteren Ausgestaltung der Erfindung kann möglich sein, dass die Erzeugung des Filtrats durch druckbeaufschlagtes Entfernen von Fluid aus dem zumindest einen Filtersystem, insbesondere zusätzlich aus im Filtersystem bereits angeordnetem Filterkuchen (d.h. eine Ansammlung von aus dem Fluid ausgefilterten Partikeln), erfolgt oder zumindest initiiert wird. Hierbei kann möglich sein, dass das zumindest eine Filtersystem als einstufiges Filtersystem oder als mehrstufiges Filtersystem, insbesondere als zweistufiges Filtersystem ausgestaltet ist. Mit anderen Worten kann die Erzeugung des Filtrats pneumatisch erfolgen.

In einer Weiterbildung der Erfindung kann vorgesehen sein, dass das Filtersystem zumindest einen Filterbeutel umfasst. Vorzugsweise ist der Filterbeutel lösbar in dem Filtersystem angeordnet. Der Filterbeutel ist als austauschbare Filtereinheit in dem Filtersystem angeordnet. Vorzugsweise werden Partikel, die in dem Filtersystem gefiltert werden, in dem Filterbeutel als Filterkuchen gesammelt. Besonders bevorzugt ist der Filterbeutel vorgesehen, um den Filterkuchen aufzunehmen. Der Filterbeutel kann in der ersten Filterstufe und/oder in der zweiten Filterstufe angeordnet sein. Vorteilhaft kann die Verwendung eines Filterbeutels eine zuverlässige Filtration ermöglichen. Weiterhin vorteilhaft kann ein Filterbeutel einfach und kostengünstig getauscht werden. Vorteilhaft kann ferner ein ordnungsgemäßer Betrieb des wasserführenden Haushaltsgeräts ermöglicht werden.

Die Erfindung kann demnach in einer vorteilhaften Ausgestaltung vorsehen, dass ein Filterbeutel, der in dem Filtersystem angeordnet ist und einen Filterkuchen aufweist, zumindest teilweise, vorzugsweise vollständig oder nahezu vollständig gemäß den vorstehend beschrieben Methoden, die, sofern sinnvoll und nicht gegenseitig ausschließend, miteinander verknüpft werden können, entwässert wird.

Der Entwässerungsvorgang eines Filterbeutels kann, wie vorstehend beschrieben, durch ein volumenveränderliches Verdrängungsmittel erfolgen.

Alternativ oder ergänzend kann der Entwässerungsvorgang des Filterbeutels durch Pressen erfolgen. Das Pressen kann durch das volumenveränderliche Verdrängungsmittel erfolgen.

In einer Weiterbildung der Erfindung kann vorgesehen sein, dass die Filtervorrichtung zumindest eine Verriegelungseinheit mit zumindest einem durch einen Aktuator beweglichen Riegel umfasst, um den Zugang zu der Filtervorrichtung zuzulassen oder zu sperren. Eine Verriegelung der Filtervorrichtung kann vorteilhaft ermöglichen, dass die Filtervorrichtung nicht unbeabsichtigt oder zu einem ungelegenen Zeitpunkt entnommen werden kann. Vorteilhaft kann ein ordnungsgemäßer Betrieb des wasserführenden Haushaltsgeräts ermöglicht werden. Insbesondere können Beschädigungen durch unbeabsichtigtes Entnehmen der Filtervorrichtung oder eine Entnahme der Filtervorrichtung zu einem ungelegenen Zeitpunkt, beispielsweise bei einer stattfindenden Reinigung bzw. Regeneration der Filtervorrichtung, verhindert werden. Eine Fehleranfälligkeit des wasserführenden Haushaltsgeräts kann gleichermaßen entsprechend reduziert werden.

Durch Bewegen des Riegels der Riegel zwischen einer Offenstellung, in der die Filtervorrichtung freigebbar bzw. entnehmbar ist, und in einer Verriegelungsstellung, in welcher die Filtervorrichtung nicht zugänglich ist, bewegt werden. In der Offenstellung ist die Filtereinheit entsprechend entriegelt.

Alternativ oder ergänzend kann in einer Weiterbildung der Erfindung vorgesehen sein, dass zumindest ein volumenveränderliches Verdrängungsmittel zur wenigstens teilweisen Verdrängung von Fluid aus der zumindest einen Filtervorrichtung und zur Betätigung des Aktuators umfasst ist.

Eine Ausgestaltung kann vorsehen, dass der Aktuator zur Entriegelung durch Volumenverringerung, vorzugsweise durch Entlüftung, des volumenveränderlichen Verdrängungsmittels bewegbar ausgebildet ist. In einer Weiterbildung kann vorgesehen sein, dass der Aktuator zur Entriegelung durch Volumenverringerung, vorzugsweise durch Entlüftung, des volumenveränderlichen Verdrängungsmittels, betreibbar ausgebildet ist und ferner zumindest eine Einheit zu einer Drucklufterzeugung, insbesondere Kompressor oder dergleichen Drucklufterzeugungseinheit, umfasst ist, die mit dem Aktuator pneumatisch verbunden ist. Insbesondere kann ergänzend hierzu oder alternativ vorgesehen sein, dass der Aktuator bei einer Volumenverringerung des volumenveränderlichen Verdrängungsmittels in eine Entriegelungsposition bewegbar ist, wodurch die Filtervorrichtung in einer Freigabeposition ist, in der eine Entnahme der Filtervorrichtung aus dem wasserführenden Haushaltsgerät ermöglicht werden kann.

Vorzugsweise werden basierend auf dem Zustand des Filtersystems Betriebsanweisungen ausgegeben. Betriebsanweisungen können bei der Steuerung des Haushaltsgeräts herangezogen werden. Beispielsweise kann eine Betriebsanweisung dazu dienen einen nächsten Programmschritt des Haushaltsgeräts zu beginnen, oder einen vorhergehenden Programmschritt beenden. Beispielsweise kann ein Betrieb des Haushaltsgeräts unterbunden werden, wenn kein Filterelement eingesetzt ist.

Gemäß einem weiteren Aspekt der vorliegenden Erfindung wird ein Computerprogrammprodukt bereitgestellt, umfassend Programmcode, der, wenn er durch eine Steuereinheit ausgeführt wird, diese veranlasst, das Verfahren gemäß einer der obigen Ausgestaltungen auszuführen.

Zudem betrifft die Erfindung ein Computerprogrammprodukt umfassend Programmcodemittel, die auf einem computerlesbaren Medium gespeichert sind, um das erfindungsgemäße Verfahren durchzuführen, wenn das Programm in einer Steuereinheit läuft.

Gemäß einem weiteren Aspekt der vorliegenden Erfindung wird ein wasserführendes Haushaltsgerät, bereitgestellt umfassend:
Zumindest ein Filtersystem zur Filterung eines Fluids,
eine Steuereinheit, die dazu ausgestaltet ist, das Verfahren gemäß einer der obigen Ausgestaltungen auszuführen. Ein wasserführendes Haushaltsgerät ein Wäschepflegegerät sein. In einer Ausgestaltung ist das wasserführende Haushaltsgerät als Wäschepflegegerät ausgestaltet, wobei das Wäschepflegegerät zumindest eine Waschtrommel und wenigstens einen Laugenbehälter aufweist, wobei das Wäschepflegegerät ferner zumindest ein Filtersystem und eine Steuereinheit aufweist, wobei der Laugenbehälter zumindest eine Erfassungseinheit zur Erfassung eines Füllstands in dem Laugenbehälter aufweist, wobei das Filtersystem und der Laugenbehälter fluidtechnisch miteinander verbunden sind, wobei bei einem Reinigungsvorgang des Filtersystems Fluid aus dem Filtersystem in den Laugenbehälter gelangt. Die Erfassung des Füllstands erfolgt in einer Zeitspanne, in der Fluid aus dem Filtersystem austritt und in dem Laugenbehälter durch die Erfassungseinheit erfasst wird. Besonders bevorzugt erfolgt die Erfassung durch einen in dem Laugenbehälter angeordneten Füllstandsensor. Insbesondere erfolgt die Erfassung des Füllstands in Abhängigkeit von der Erzeugung eines Filtrats in dem Filtersystem bzw. in der Filtereinheit.

Eine Ausführungsform sieht vor, dass das Wäschepflegegerät zumindest einen Füllstandsensor und ein Filtersystem, vorzugsweise ein zweistufiges Filtersystem zur Filtration von Partikeln, umfasst. Vorzugsweise ist das zweistufige Filtersystem derart ausgestaltet, dass in einer ersten Filterstufe Partikel aufkonzentriert werden und bei einem Reinigen die Partikel zu einer zweiten Filterstufe. Die erste Filterstufe kann als Primärfilter bzw. Primärfilterstufe bezeichnet werden. Die zweite Filterstufe kann als Sekundärfilter bzw. Sekundärfilterstufe bezeichnet werden. Vorzugsweise umfasst die Primärfilterstufe zumindest einen austauschbaren Partikelfilter. Vorzugsweise umfasst die Sekundärfilterstufe zumindest einen austauschbaren Partikelfilter. Der austauschbare Partikelfilter ist vorzugsweise als Filterbeutel ausgestaltet. Insbesondere kann somit in einer besonders bevorzugten Ausgestaltung der Erfindung vorgesehen sein, dass der Primärfilter und/oder der Sekundärfilter entweder einzeln oder jeweils zumindest einen Filterbeutel umfasst.

Ein derartiger in der Sekundärfilterstufe angeordneter Partikelfilter bzw. Filterbeutel stellt einen strömungstechnischen Widerstand dar. Sofern kein Partikelfilter bzw. Filterbeutel eingesetzt ist, ist dieser Widerstand sehr gering und es ist davon auszugehen, dass Fluid nahezu ohne zeitlichen Verzug in den Laugenbehälter zurückfließt. Diese zeitliche Komponente kann computergestützt überwacht werden und gibt nicht nur Rückschluss auf das Vorhandensein eines Partikelfilters, sondern ferner über dessen Belegungszustand.

Eine weitere Ausgestaltung kann vorsehen, dass das wasserführende Haushaltsgerät ein Filtersystem mit zumindest einer ersten Filterstufe bzw. einem Primärfilter und einer zweiten Filterstufe bzw. einem Sekundärfilter umfasst, wobei zumindest eine Absperrvorrichtung zum Blockieren eines Fluidwegs zwischen der ersten Filterstufe und der zweiten Filterstufe des wasserführenden Haushaltsgeräts umfasst ist, wobei die Absperrvorrichtung zumindest eine Sperreinheit umfasst, die zwischen einer ersten Position, in welcher der Fluidweg freigegeben ist, und einer zweiten Position, in der der Fluidweg im Wesentlichen blockiert ist, beweglich ist. Auf diese Weise kann ein Zuverlässiges Blockieren des Fluidwegs zwischen erster und zweiter Filterstufe ermöglicht werden. Dies kann insbesondere dann vorgesehen sein, wenn Abwasser wird das mehrstufiges Filtersystem aufbereitet wird. In einem Fall, in dem die erste Filterstufe vorgesehen ist, um Partikel aus dem Abwasser aufzukonzentrieren und die zweite Filterstufe vorgesehen ist, um das Partikelkonzentrat weiter zu entwässern und zu speichern, ist für einen ordnungsgemäßen Betrieb des wasserführenden Haushaltsgeräts erforderlich, dass verhindert wird, dass abzupumpende Flüssigkeit in die zweite Filterstufe gelangt und diese blockiert.

In einer besonders vorteilhaften Weiterbildung der Erfindung kann vorgesehen sein, dass die Sperreinheit so ausgestaltet ist, dass sie passiv zwischen der ersten Position und der zweiten Position beweglich ist. Vorteilhaft kann eine konstruktiv vereinfachte Sperreinheit bereitgestellt werden, wodurch eine Fehleranfälligkeit des wasserführenden Haushaltsgeräts weiter reduziert werden kann.

In einer weiteren Ausgestaltung kann vorgesehen sein, dass die Absperrvorrichtung als Rückschlagklappe ausgestaltet ist. Vorgesehen sein kann alternativ oder ergänzend ferner, dass die Sperreinheit als Rückschlagklappe ausgestaltet ist. Eine derartige Ausgestaltung kann konstruktiv besonders einfach bereitgestellt werden und ein zuverlässiges Blockieren eines Fluidwegs bewerkstelligen. Vorgesehen sein kann auch, dass die Absperrvorrichtung zumindest eine Rückschlagklappe umfasst. Möglich kann ferner sein, dass die Rückschlagklappe als federbelastete Rückschlagklappe ausgestaltet ist. Vorgesehen sein kann weiterhin, dass die Rückschlagklappe zumindest ein einseitig drehbar gelagertes Dichtelement umfasst.

Somit kann in einer Weiterbildung auch ein wasserführendes Haushaltsgerät vorgesehen sein, umfassend zumindest eine erste Filtereinheit und eine zweite Filtereinheit, die über einen Fluidweg fluidtechnisch miteinander verbunden sind, und mit zumindest einer Absperrvorrichtung, die den Fluidweg zwischen der ersten Filtereinheit und der zweiten Filtereinheit im Wesentlichen blockierbar angeordnet ist.

Die Vorteile und Merkmale, die oben im Zusammenhand mit dem Verfahren erläutert wurden, gelten analog auch für die Vorrichtung und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- Fig. 1: eine schematische Darstellung des Ablaufs einer Ausführungsform des erfindungsgemäßen Computer-implementierten Verfahrens;
- Fig. 2: ein Ausführungsbeispiel eines erfindungsgemäßen wasserführenden Haushaltsgeräts in stark vereinfachter schematischer Darstellung.

In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

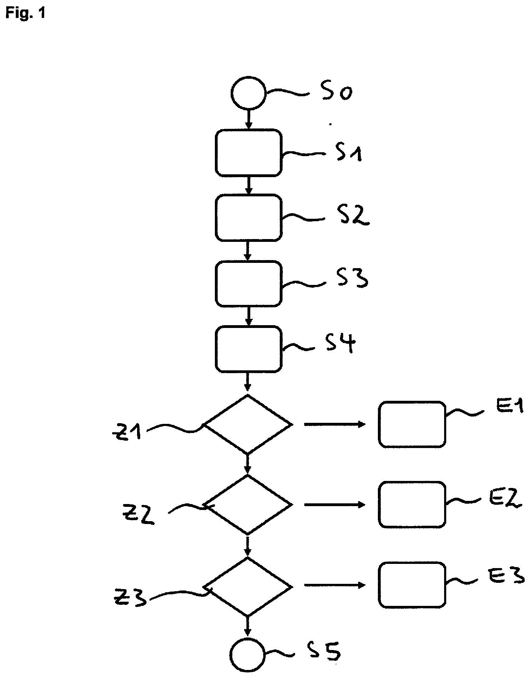

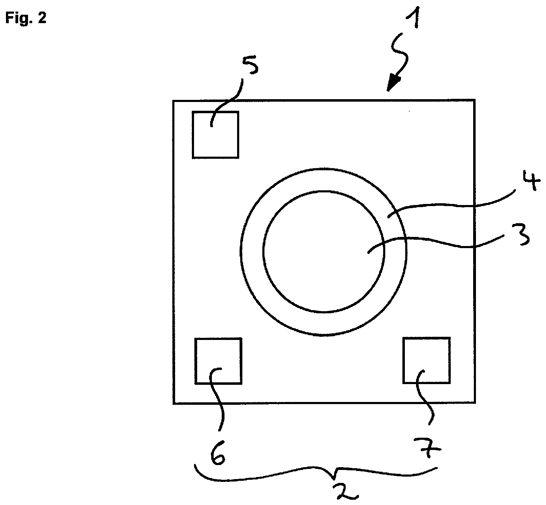

In der Figur 1 ist der Ablaufdiagramm des erfindungsgemäßen computerimplementierten Verfahrens gezeigt, mittels dem die Bestimmung eines Zustands eines Filtersystems in einem wasserführenden Haushaltsgerät (siehe auch Figur 2) erfolgt.

Bei dem Verfahren erfolgt in einem ersten Schritt S1 - nach Beginn des Verfahrens, der als Schritt S0 bezeichnet ist - ein Initiieren eines Fluidstroms zu dem Filtersystem zu einer Startzeit ts, um ein Filtrat zu erlangen.

Beim Initiieren eines Fluidstroms zu dem Filtersystem 2 (siehe Figur 2) zu einer Startzeit ts wird ein Timer gestartet. Die Startzeit ts entspricht einem Zeitpunkt an dem eine Zeit gleich Null ist (t = 0).

In einem an den ersten Schritt S1 anschließenden zweiten Schritt S2 erfolgt eine Erfassung des Filtrats. Die Erfassung erfolgt in einer Durchflussrichtung stromabwärts des Filtersystems. 2

Die Erfassung des Filtrats erfolgt, um eine Ankunftszeit ta des Filtrats zu bestimmen. Die Ankunftszeit ta bezieht sich auf einen Zeitpunkt, an dem das Filtrat durch Durchflussmessung und/oder Volumenstrommessung an einer hierfür geeigneten Einheit zur Durchflussmessung und/oder Volumenstrommessung erfasst bzw. detektiert wird.

Optional kann ein Verzögerungsschritt als dritter Schritt S3 erfolgen.

In einem darauffolgenden Schritt S4 erfolgt die Bestimmung einer Filterzeit tf basierend auf der Startzeit ts und der Ankunftszeit ta. Die Filterzeit tf wird dabei durch Differenz der Ankunftszeit Ta und der Startzeit ts ermittelt. Der Timer, der beim Initiieren des Fluidstroms zu dem Filtersystem 2 zu der Startzeit ts gestartet wurde, wird bei der Ankunftszeit ta gestoppt. Die Zeitspanne, die sich aus der Differenz der Ankunftszeit Ta und der Startzeit ts ergibt, entspricht der Filterzeit tf.

Alternativ oder ergänzend wird der Timer, der beim Initiieren des Fluidstroms zu dem Filtersystem 2 zu der Startzeit ts gestartet wurde, zu einem Zeitpunkt gestoppt, an dem ein vorgegebener Füllstand in einem Fluidbehälter des wasserführenden Haushaltsgeräts erreicht wird. In einem solchen Fall ist die Ankunftszeit ta durch Erreichen eines vorgegebenen Füllstands in einem Fluidbehälter des wasserführenden Haushaltsgeräts definiert, wobei sich die Filterzeit tf entsprechend der Differenz von ta und ts (ta - ts) errechnet.

Möglich kann alternativ oder ergänzend auch sein, dass der Timer dann gestoppt wird, wenn der Füllstand in dem Fluidtank oder dergleichen Behälter, beispielsweise Laugenbehälter 4 (siehe Figur 2) einen vorbestimmten Wert erreicht hat oder überschritten hat.

Anhand der ermittelten Filterzeit tf der jeweiligen Zeitspanne kann die Bestimmung eines Zustands der Filtervorrichtung (z.B. einer Filterbelegung) erfolgen. Die Bestimmung der Filterbelegung kann beispielhaft derart erfolgen: Ist die Filterzeit tf kleiner als eine erste Zeit t1 (tf < t1), kann davon ausgegangen werden, dass kein Filtersystem 2 vorhanden ist. Dies ist demnach insbesondere dann der Fall, wenn die Filterzeit tf sehr kurz ist. Im Ablaufdiagramm ist die Situation, in der die Filterzeit tf kleiner ist als die erste Zeit t1 (tf < t1) durch Z1 beschrieben. Das entsprechende Ergebnis, dass kein Filtersystem 2 ist durch E1 dargestellt.

Ist die Filterzeit tf hingegen hinreichend lang, jedoch nicht übermäßig lange, kann davon ausgegangen, dass das Filtersystem 2 ordnungsgemäß funktioniert. Dies ist dann der Fall, wenn die Filterzeit kleiner ist als eine zweite Zeit t2 (tf < t2), wobei t2 größer ist als t1 (t2 > t1). Im Ablaufdiagramm ist die Situation, in der die Filterzeit kleiner ist als eine zweite Zeit t2 (tf < t2) durch Z2 beschrieben. Das entsprechende Ergebnis, dass das Filtersystem 2 ordnungsgemäß funktioniert, ist durch E2 dargestellt.

Ist die Filterzeit tf hingegen sehr lang, kann von einer hohen Filterbelegung und damit einhergehend von einem nicht ordnungsgemäß funktionierendem Filtersystem 2 auszugehen. Dies ist dann der Fall, wenn die Filterzeit größer oder gleich einer dritten Zeit t3 (tf ≥ t3) ist, wobei t3 größer ist als t2 (t3 > t2). In einem solchen Fall ist vorzugsweise vorgesehen, dass das Filtersystem gereinigt oder dergleichen regeneriert oder getauscht wird. Im Ablaufdiagramm ist die Situation, in der Filterzeit größer oder gleich einer dritten Zeit t3 (tf ≥ t3) ist durch Z3 beschrieben. Das entsprechende Ergebnis, dass das Filtersystem 2 nicht ordnungsgemäß funktioniert, ist durch E3 dargestellt. Nach der Bestimmung endet das Verfahren mit Schritt S5.

Im Ablaufdiagramm gilt ferner die Beziehung: t3>t2>t1.

Die Ermittlung der Zeiten t1, t2, t3, tf und ta und deren Vergleich hinsichtlich einer Bestimmung zur Filterbelegung gemäß vorstehenden Ausführungen erfolgt insbesondere durch den Computer 5.

In der Figur 2 ist in stark vereinfachter schematischer Darstellung ein wasserführendes Haushaltsgerät 1 gezeigt, das im vorliegenden Ausführungsbeispiel als Wäschepflegegerät ausgestaltet ist.

Das als Wäschepflegegerät ausgestaltete erfindungsgemäße wasserführende Haushaltsgerät 1 umfasst eine Waschtrommel 3 und einen Laugenbehälter 4.. Das wasserführende Haushaltsgerät umfasst ferner ein Filtersystem 2, das als zweistufiges Filtersystem 2 ausgestaltet ist und eine erste Filterstufe 6 sowie eine zweite Filterstufe 7 umfasst. Die erste Filterstufe 6 kann auch als Primärfilterstufe bzw. als Primärfilter bezeichnet werden. Die zweite Filterstufe 7 kann auch als Sekundärfilterstufe bzw. als Sekundärfilter bezeichnet werden. Das wasserführende Haushaltsgerät 1 umfasst ferner eine Steuereinheit 5, die dazu ausgestaltet ist, das obige Verfahren auszuführen.

Die Steuereinheit 5 kann einen Timer oder dergleichen Zeiterfassungseinrichtung, insbesondere zur Ermittlung der Filterzeit tf umfassen. Alternativ kann ein separater Timer vorgesehen sein.

### Bezugszeichenliste

- 1: Wasserführendes Haushaltsgerät
- 2: Filtersystem
- 3: Waschtrommel
- 4: Laugenbehälter
- 5: Steuereinheit
- 6: Erste Filterstufe
- 7: Zweite Filterstufe

- ts: Startzeit
- ta: Ankunftszeit
- tf: Filterzeit

- t1: Erste Zeit
- t2: Zweite Zeit
- t3: Dritte Zeit

## Patentansprüche

1. Computerimplementiertes Verfahren zur Bestimmung eines Zustands eines Filtersystems (2) in einem wasserführenden Haushaltsgerät (1), umfassend:
Initiieren eines Fluidstroms zu dem Filtersystem (2) zu einer Startzeit (ts), um ein Filtrat zu erlangen, wobei das Filtrat in einem zweistufigen Filtersystem (2) erzeugt wird, wobei eine erste Filterstufe als Primärfilterstufe und eine zweite Filterstufe als Sekundärfilterstufe ausgestaltet ist, wobei Partikel in der ersten Filterstufe aufkonzentriert und zu einer Reinigung zu der zweiten Filterstufe transportiert werden, wobei das Filtrat in der zweiten Filterstufe des zweistufigen Filtersystems (2) erzeugt wird,
Erfassen des Filtrats stromabwärts des Filtersystems (2), um eine Ankunftszeit (ta) des Filtrats zu bestimmen, wobei das Erfassen des Filtrats zumindest erstmalig erfolgt, nachdem der Fluidstrom das Filtersystem passiert und eine Erfassungseinheit, die in einer Durchflussrichtung nach dem Filtersystem angeordnet ist, erreicht hat,
Bestimmen einer Filterzeit (tf) basierend auf der Startzeit (ts) und der Ankunftszeit (ta), und
Bestimmen eines Zustands des Filtersystems (2) basierend auf der Filterzeit (tf).

2. Verfahren nach Anspruch 1, wobei der Zustand des Filtersystems (2) ein Vorhandensein eines Filterelements in dem Filtersystem (2) und/oder eine Belegung eines Filterelements in dem Filtersystems (2) umfasst.

3. Verfahren nach Anspruch 1 oder 2, wobei das Erfassen des Filtrats mittels Durchflussmessung und/oder Volumenmessung erfolgt.

4. Verfahren nach einem der vorhergehenden Ansprüche, wobei das Erfassen des Filtrats kontinuierlich oder in Intervallen erfolgt.

5. Verfahren nach einem der vorhergehenden Ansprüche, wobei die Ankunftszeit (ta) basierend auf einer Messung eines Füllstandsensors in einem stromabwärts des Filtersystems (2) angeordneten Behälter bestimmt wird.

6. Verfahren nach einem der vorhergehenden Ansprüche, wobei das Verfahren ferner ein Ausgeben einer Statusmeldung an einen Nutzer basierend auf dem Zustand des Filtersystems (2) umfasst.

7. Verfahren nach einem der vorhergehenden Ansprüche, wobei das Filtrat durch Verdrängung von in dem Filtersystem (2) vorhandenem Fluid erfolgt oder zumindest initiiert wird.

8. Verfahren nach einem der vorhergehenden Ansprüche, wobei basierend auf dem Zustand des Filtersystems (2) Betriebsanweisungen ausgegeben werden.

9. Computerprogrammprodukt umfassend Programmcode, der, wenn er durch eine Steuereinheit ausgeführt wird, diese veranlasst, das Verfahren gemäß einem der Ansprüche 1 bis 8 auszuführen.

10. Wasserführendes Haushaltsgerät (1), umfassend:
Zumindest ein Filtersystem zur Filterung eines Fluids,
eine Steuereinheit, die dazu ausgestaltet ist, das Verfahren gemäß einem der Ansprüche 1 bis 8 auszuführen.

## Claims

1. Computer-implemented method for determining a state of a filter system (2) in a water-conducting household appliance (1), comprising:
initiating a fluid flow towards the filter system (2) at a start time (ts), in order to obtain a filtrate, wherein the filtrate is generated in a two-stage filter system (2), wherein a first filter stage is embodied as primary filter stage and a second filter stage is embodied as secondary filter stage, wherein particles are concentrated in the first filter stage and transported to the second filter stage for cleaning, wherein the filtrate is generated in the second filter stage of the two-stage filter system (2),
collecting the filtrate downstream of the filter system (2), in order to determine an arrival time (ta) of the filtrate, wherein the collecting of the filtrate takes place at least for the first time once the fluid flow has passed the filter system and reached a collecting unit, which is arranged after the filter system in a through-flow direction,
determining a filter time (tf) based on the start time (ts) and the arrival time (ta), and
determining a state of the filter system (2) based on the filter time (tf).

2. Method according to claim 1, wherein the state of the filter system (2) comprises a presence of a filter element in the filter system (2) and/or an occupancy of a filter element in the filter system (2).

3. Method according to claim 1 or 2, wherein the collecting of the filtrate takes place by means of through-flow measurement and/or volume measurement.

4. Method according to one of the preceding claims, wherein the collecting of the filtrate takes place continuously or in intervals.

5. Method according to one of the preceding claims, wherein the arrival time (ta) is determined based on a measurement of a fill level sensor in a container arranged downstream of the filter system (2).

6. Method according to one of the preceding claims, wherein the method further comprises a status report to a user based on the state of the filter system (2).

7. Method according to one of the preceding claims, wherein the filtrate takes place by extrusion of fluid present in the filter system (2), or is at least initiated thereby.

8. Method according to one of the preceding claims, wherein operating instructions are output based on the state of the filter system (2).

9. Computer program product comprising program code which, when it is executed by a control unit, prompts it to carry out the method according to one of claims 1 to 8.

10. Water-conducting household appliance (1), comprising:
at least one filter system for filtering a fluid,
a control unit, which is embodied to carry out the method according to one of claims 1 to 8.

## Revendications

1. Procédé mis en œuvre sur ordinateur pour la détermination d'un état d'un système de filtre (2) dans un appareil ménager à circulation d'eau (1), comprenant :
le lancement d'un flux de fluide vers le système de filtre (2) à un instant de démarrage (ts) pour obtenir un filtrat, dans lequel le filtrat est produit dans un système de filtre à deux étages (2), dans lequel un premier étage de filtre est aménagé sous forme d'étage de filtre primaire et un deuxième étage de filtre sous forme d'étage de filtre secondaire, dans lequel des particules sont concentrées dans le premier étage de filtre et transportées vers le deuxième étage de filtre en vue d'un nettoyage, dans lequel le filtrat est produit dans le deuxième étage de filtre du système de filtre à deux étages (2),
la détection du filtrat en aval du système de filtre (2) pour déterminer un instant d'arrivée (ta) du filtrat, dans lequel la détection du filtrat s'effectue au moins pour la première fois après que le flux de fluide a traversé le système de filtre et a atteint une unité de détection disposée en aval du système de filtre dans le sens d'écoulement,
la détermination d'une période de filtrage (tf) en fonction de l'instant de démarrage (ts) et de l'instant d'arrivée (ta), et
la détermination d'un état du système de filtre (2) en fonction de la période de filtrage (tf).

2. Procédé selon la revendication 1, dans lequel l'état du système de filtre (2) comprend une présence d'un élément de filtre dans le système de filtre (2) et/ou un remplissage d'un élément de filtre dans le système de filtre (2).

3. Procédé selon la revendication 1 ou 2, dans lequel la détection du filtrat s'effectue par mesure du débit et/ou mesure du volume.

4. Procédé selon l'une des revendications précédentes, dans lequel la détection du filtrat s'effectue en continu ou par intervalles.

5. Procédé selon l'une des revendications précédentes, dans lequel l'instant d'arrivée (ta) est déterminé sur la base d'une mesure d'un capteur de niveau dans un réservoir disposé en aval du système de filtre (2).

6. Procédé selon l'une des revendications précédentes, dans lequel le procédé comprend en outre une émission d'un message d'état à un utilisateur en fonction de l'état du système de filtre (2).

7. Procédé selon l'une des revendications précédentes, dans lequel le filtrat s'effectue ou est au moins lancé par refoulement de fluide présent dans le système de filtre (2).

8. Procédé selon l'une des revendications précédentes, dans lequel des instructions d'utilisation sont émises en fonction de l'état du système de filtre (2).

9. Produit de programme informatique comprenant un code de programme qui, lorsqu'il est exécuté par une unité de commande, amène celle-ci à exécuter le procédé selon l'une des revendications 1 à 8.

10. Appareil ménager à circulation d'eau (1) comprenant :
au moins un système de filtre pour le filtrage d'un fluide,
une unité de commande aménagée pour exécuter le procédé selon l'une des revendications 1 à 8.
